# EUROPÄISCHE PATENTSCHRIFT

(11) **EP 0 848 803 B1**
(45) Veröffentlichungstag und Bekanntmachung des Hinweises auf die Patenterteilung: **16.06.1999**
(21) Anmeldenummer: 96937989.0
(22) Anmeldetag: 30.08.1996
(51) Int. Cl.: G01D 3/028, G01L 19/04

(54) **VERFAHREN ZUM KOMPENSIEREN DES DURCH TEMPERATURÄNDERUNGEN VERURSACHTEN FEHLVERHALTENS VON MESSEINRICHTUNGEN**
PROCESS FOR COMPENSATING FOR THE INCORRECT OPERATION OF MEASURING DEVICES CAUSED BY TEMPERATURE CHANGES
PROCEDE POUR COMPENSER LE DYSFONCTIONNEMENT D'INSTRUMENTS DE MESURE PROVOQUE PAR UN CHANGEMENT DE LA TEMPERATURE

(30) Priorität: 04.09.1995 DE 19533505
(43) Veröffentlichungstag der Anmeldung: 24.06.1998
(73) Patentinhaber: SIEMENS AKTIENGESELLSCHAFT, 80333 München (DE)
(72) Erfinder: KRISCH, Burkhard, D-12307 Berlin (DE)
(86) Internationale Anmeldenummer: DE9601657
(87) Internationale Veröffentlichungsnummer: WO9709587

(56) Entgegenhaltungen:
- EP-A- 0 580 462
- DE-A- 3 340 207
- US-A- 4 845 649
- US-A- 5 319 965
- CORLEY ET AL.: "The application of smart electronics to improve pressure transmitter performance" 22.Oktober 1984 , PROCEEDINGS IECON '84 , CONTINENTAL HOTEL TOKYO, JAPAN XP002022197 siehe Seite 1081 - Seite 1086; Abbildung 3

## Beschreibung

Es ist bekannt, daß viele Meßeinrichtungen sich unter der Einwirkung einer äußeren Einflußgröße nicht so verhalten, wie es gewünscht ist. Dies gilt insbesondere hinsichtlich des Einflusses einer Temperatur als äußerer Einflußgröße, weil viele Meßeinrichtungen bzw. der eigentliche Meßteil solcher Meßeinrichtungen Ausgangsgrößen liefern, die mit sich ändernder Temperatur nicht mehr einer eingangsseit-igen Meßgröße in der geforderten Weise proportional sind. So weisen beispielsweise Drucksensoren in Halbleitertechnik, wie sie in Meßeinrichtungen in Form von Druck- oder Druckdifferenz-Meßumformern verwendet werden, häufig eine so große Temperaturabhängigkeit auf, daß sie die geforderte Meßgenauigkeit nicht einhalten. Eine vorgegebene Meßgenauigkeit läßt sich dann nur dadurch erreichen, daß der Temperaturfehler kompensiert wird. Eine solche Kompensation ist besonders gut bei Meßeinrichtungen mit einem Programmierteil durchführbar, weil im zusammenwirken mit einer Datenverarbeitungseinrichtung mittels des Programmierteils die jeweilige Meßeinrichtung so eingestellt werden kann, daß ihre Ausgangsgröße von Temperaturänderungen nahezu unbeeinflußt ist. Bei Druck- oder Druckdifferenz-Meßumformern spricht man dann von intelligenten Sensoren, die aus dem Sensor selbst und einem zugeordneten Programmierteil bestehen.

Die Erfindung geht von einem Verfahren zum Kompensieren des durch Temperaturänderungen verursachten Fehlverhaltens von jeweils mit einem Programmierteil versehenen Meßeinrichtungen aus, bei dem die Meßeinrichtungen mit den zugehörigen Programmierteilen in einem Temperaturänderungen ausgesetzten Raum untergebracht werden, in dem auch mindestens ein Temperaturfühler vorhanden ist, die Meßeinrichtungen mit den zugehörigen Programmierteilen sowie der mindestens eine temperaturfühler mit einer Datenverarbeitungseinrichtung verbunden werden, eine Meßgröße an die Meßeinrichtungen angelegt wird und Temperaturänderungen in dem Raum vorgenommen werden, die bei der jeweils geänderten Temperatur ermittelten Meßwerte von der Datenverarbeitunzseinrichtung erfaßt und verarbeitet werden und von der Datenverarbeitungseinrichcung das durch die Temperaturveränderungen verursachte Fehlverhalten kompensierende Signale an den Programmierteil der Meßeinrichtungen abgegeben werden.

Ein Verfahren dieser Art ist der Veröffentlichung "Piezoresistive und kapazitive Drucksensoren mit integrierter Signalvorverarbeitung", Verbundprojekt 1989 bis 1992, Abschlußbericht TU Berlin, Fraunhofer-Institut für Mikroelektronische Schaltungen und Systeme, Duisburg und Universität Stuttgart, 1994, Band 9, auf den Seiten 19 und 20 entnehmbar. Bei diesem bekannten Verfahren werden hinsichtlich ihres Temperaturverhaltens zu kompensierende Drucksensoren in einem Temperaturprüfschrank untergebracht, der zum Zwecke der Kompensation stufenweise aufgeheizt wird. Nach jeder Aufheizung des Schrankes auf eine nächsthöhere Temperatur wird bei der Durchführung des bekannten Kompensationsverfahrens eine gewisse Zeit abgewartet, um sicherzustellen, daß die zu kompensierenden Drucksensoren auch tatsächlich die Temperatur erreicht haben, die innerhalb des Schrankes jeweils eingestellt ist. Ist dies erreicht, dann wird von den Drucksensoren jeweils ein Meßwert über einen Multiplexer einer Datenverarbeitungseinrichtung zugeführt. Sind bei den vorgegebenen Temperaturstufen auf diese Weise die jeweiligen Temperaturwerte und die Ausgangswerte der Drucksensoren in der Datenverarbeitungseinrichtung erfaßt, dann erzeugt diese die Temperaturabhängigkeit kompensierende Signale und gibt diese an den Programmteil der Drucksensoren ab, wodurch sichergestellt wird, daß unabhängig von Temperaturänderungen die Ausgangsgröße der Drucksensoren der eingangsseitigen Meßgröße proportional ist.

Das bekannte Verfahren zum Kompensieren des durch Temperaturänderungen verursachten Fehlverhaltens von mit einem Programmierteil versehenen Meßeinrichtungen ist zeitlich sehr aufwendig, weil nach jeder Erhöhung der Temperatur in dem Raum des Temperaturprüfschrankes eine längere Zeit mit der Erfassung des Meßwertes abgewartet werden muß, bis die jeweils zu untersuchenden Meßeinrichtungen die Temperatur des Raumes angenommen haben. Dadurch wird die Fertigungszeit der Meßeinrichtungen bzw. Drucksensoren erheblich verlängert, was die Herstellung der Drucksensoren insgesamt relativ kostspielig macht.

Der Erfindung liegt die Aufgabe zugrunde, ein Verfahren zum Kompensieren des durch Temperaturänderungen verursachten Fehlverhaltens von mit einem Programmierteil versehenen Meßeinrichtungen vorzuschlagen, das sich erheblich schneller und damit kostengünstiger durchführen läßt.

Zur Lösung dieser Aufgabe werden bei einem Verfahren der eingangs angegebenen Art erfindungsgemäß Meßeinrichtungen mit jeweils einem einem eigentlichen Meßteil dicht benachbart angeordneten Temperaturfühler verwendet werden, und es wird die Temperaturänderung kontinuierlich vorgenommen, und es werden dabei in einem von der Datenverarbeitungseinrichtung vorgegebenen Takt die jeweilige Ausgangsgröße des Temperaturfühlers und der jeweilige Meßwert der Meßeinrichtungen erfaßt.

Es ist zwar aus der US-Patentschrift US 5,319,965 ein Druckaufzeichnungsgerät bekannt, bei dem durch Temperaturänderungen unbeeinflußte Druckmeßergebnisse erhalten werden, indem in einem Speicher abgelegte Kalibrierwerte berücksichtigt werden, jedoch ist in dieser Druckschrift nicht angegeben, wie die Kalibrierwerte gewonnen sind.

Ferner ist es aus der deutschen Offenlegungsschrift DE 33 40 207 A1 bekannt, zur automatischen Erfassung der Temperaturabhängigkeit von Meßgrößen einen Temperaturbereich ohne Haltepunkte zu durchfahren. Bei vorgegebenen Temperaturen werden - mittels eines Temperaturfühlers - zugehörige Meßsignale der von der Temperatur abhängigen Meßgröße erfaßt. Aus zugehörigen Wertepaaren wird eine Fehlerfunktion gebildet, die zur Temperaturkompensation später im Einsatzfalle gewonnener Meßsignale zur Verfügung steht, wobei zur tatsächlichen Temperaturkompensation ein weiterer Temperaturfühler erforderlich ist.

Es ist auch ein Druckdifferenz-Meßumformer bekannt ("IECON '84, Seiten 1081-1086), bei dem in den Meßumformer ein Temperaturfühler integriert ist. Zur Berücksichtigung einer Temperaturabhängigkeit der Ausgangsgröße des Druckdifferenz-Sensors dieses Meßumformers werden mittels des Temperaturfühlers Korrekturgrößen gewonnen und berücksichtigt. In welcher Weise dies im einzelnen geschieht, läßt sich der Druckschrift nicht entnehmen.

Aus der US-Patentschrift US 4,845,649 geht es ferner als bekannt hervor, das Verhalten eines Drucksensors in Abhängigkeit von Temperaturänderungen zu erfassen und festzuhalten. Wie dies im einzelnen geschieht, ist in der Druckschrift nicht beschrieben.

In der europäischen Patentanmeldung EP 0 580 462 A1 ist ein Verfahren beschrieben, das weitestgehend dem eingangs ausführlich dargelegten Verfahren entspricht.

Ein wesentlicher Vorteil des erfindungsgemäßen Verfahrens besteht darin, daß es sich erheblich schneller als das eingangs beschriebene, bekannte Verfahren durchführen läßt, wodurch eine erhebliche Senkung der Fertigungskosten erreicht ist. Da die Temperatur bei dem erfindungsgemäßen Verfahren kontinuierlich verändert wird, also nicht jeweils abgewartet wird, bis die Meßeinrichtung die Temperatur in dem Raum erreicht hat, entfallen die bei dem bekannten Verfahren erforderlichen Wartezeiten. Treten größere Temperaturunterschiede zwischen der Temperatur in dem Raum mit den Meßeinrichtungen und der Temperatur der Meßeinrichtung selbst auf, dann ist dies nicht weiter störend, weil sich diese - weitgehend gleichmäßigen-Temperaturunterschiede ohne weiteres mittels der Datenverarbeitungseinrichtung rein rechnerisch kompensieren lassen, weil diese Unterschiede als erfahrungswerte vorliegen oder experimentell ermittelt werden können. Außerdem ist sichergestellt, daß der eigentliche Meßteil der Meßeinrichtung, im Falle eines Druck- und Druckdifferenz-Meßumformers der Drucksensor, eine weitestgehend gleiche Temperatur wie der benachbarte Temperaturfühler aufweist, so daß unterschiedliche Temperaturen zwischen den Drucksensoren und den Temperaturfühlern nur zu geringen, weitestgehend temperaturunabhängigen Meßwertabweichungen führen, die durch eine spätere Kalibrierung der Druckkennlinie korrigiert werden können.

Als besonders vorteilhaft wird es angesehen, wenn bei dem erfindungsgemäßen Verfahren die Temperaturen von einem kleinen Wert ausgehend kontinuierlich vergrößert wird und bei Erreichen eines Höchstwertes der Temperatur die kompensierenden Signale erzeugt und zum Programmierteil der Meßeinrichtungen übertragen werden und die Temperatur vom Höchstwert kontinuierlich bis zu dem kleinen Wert unter Erfassung der Ausgangsgröße des Temperaturfühlers und der Meßwerte in dem von der Datenverarbeitungseinrichtung vorgegebenen Takt verringert wird und die Meßwerte in der Datenverarbeitungseinrichtung zur Überprüfung des Kompensationsergebnisses ausgewertet werden. Bei dieser Ausgestaltung wird ausgenutzt, daß der aufgeheizte Raum vor der Entnahme der Meßeinrichtungen nach dem Kompensationsvorgang sowiesc abkühlen muß; der Abkühlvorgang wird nun dazu benutzt, das Kompensationsergebnis zu überprüfen.

Bei einer vorteilhaften Ausgestaltung des erfindungsgemäßen Verfahrens wird zur Kompensation des Einflusses des statischen Druckes auf das Verhalten eines Druckdifferenz-Meßumformers als Meßeinrichtung dem Meßumformer ein den statischen Druck erfassender Fühler (Druckfühler) zugeordnet wird. Auf diese Weise läßt sich ein Druckdifferenz-Meßumformer in vergleichsweise kurzer Zeit so einstellen, daß seine Ausgangsgröße vom statischen Druck weitestgehend unbeeinflußt ist.

Die Erfindung läßt sich mit Vorteil auch dann anwenden, wenn erfindungsgemäß zur Linearisierung der Druckkennlinie von als Druck- oder Druckdifferenzmeßumformer ausgebildeten Meßeinrichtungen in dem Raum ein einziger auf Druck als Einflußgröße ansprechender Präzisionsdruckgeber angeordnet und der Druck in dem Raum kontinuierlich verändert wird; während der Druckveränderung werden in einem durch die Datenverarbeitungseinrichtung vorgegebenen Takt die Ausgangsgröße des Präzisionsdruckgebers und die Werte der Druck- oder Druckdifferenzmeßumformer erfaßt.

Bei dem Verfahren zur Linearisierung der Druckkennlinie wird es als vorteilhaft angesehen, wenn der Druck von einem kleinen Wert ausgehend kontinuierlich bis zu einem Höchstwert vergrößert wird und bei Erreichen des Höchstwertes des Druckes in dem Raum eine Linearisierung der Kennlinie bewirkende Signale von der Datenverarbeitungseinrichtung erzeugt und zum Programmierteil übertragen werden; anschließend wird der Druck vom Höchstwert kontinuierlich bis zu dem kleinen Wert unter Erfassung der Ausgangsgröße des Präzisionsdruckgebers und der Meßwerte in dem durch die Datenverarbeitungseinrichtung vorgegebenen Takt verringert, und die Meßwerte werden in der Datenverarbeitungseinrichtung zur Überprüfung des Linearisierungsergebnisses ausgewertet. Der Vorteil dieser Ausgestaltung des erfindungsgemäßen Verfahrens wird darin gesehen, daß bei einer Druckentlastung des Raumes mit den Meßeinrichtungen gleichzeitig Meßwerte zur Überprüfung des Linearisierungsergebnisses gewonnen und ausgewertet werden.

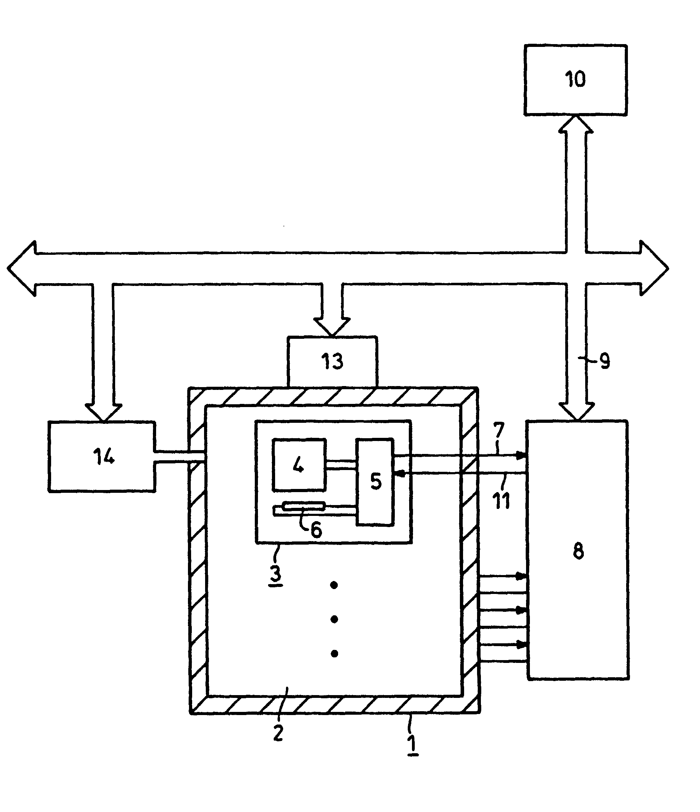

Zur Erläuterung der Erfindung ist in der Figur ein Ausführungsbeispiel einer Anordnung zur Durchführung des erfindungsgemäßen Verfahrens dargestellt.

Die in der Figur gezeigte Anordnung enthält einen Ofen 1, in dessen innerem Raum 2 mehrere Meßeinrichtungen 3 angeordnet sind, die im vorliegenden Falle hinsichtlich ihres Temperaturverhaltens kompensiert werden sollen; in der Figur ist nur eine einzige Meßeinrichtung 3 gezeigt, weitere gleich aufgebaute Einrichtungen sind durch Punkte angedeutet.

Jede Meßeinrichtung 3 enthält einen eigentlichen Meßteil 4 sowie einen Programmierteil 5. Bei dem eigentlichen Meßteil 4 kann es sich um einen Drucksensor handeln, wenn die Meßeinrichtung 3 ein Druck- oder Druckdifferenz-Meßumformer ist. Der Programmierteil 5 ist dem vorzugsweise in Halbleitertechnik hergestellten Drucksensor 4 in diesem Falle fest zugeordnet, so daß es sich um einen sog. intelligenten Sensor handelt. Unmittelbar benachbart zum Drucksensor 4 ist ein Temperaturfühler 6 angeordnet, so daß dieser Temperaturfühler 6 stets die gleiche Temperatur wie der benachbarte Drucksensor 4 aufweist. Der Temperaturfühler 6 ist ebenfalls an den Programmierteil angeschlossen.

Die Meßeinrichtung 3 ist über eine erste elektrische Verbindung 7 mit einem Multiplexer 8 verbunden, um Meßwerte von dem Meßteil 4 und dem Temperaturfühler 6 über ein Bussystem 9 zu einer Datenverarbeitungseinrichtung 10 zu führen, die zweckmäßigerweise als Personal Computer ausgebildet ist. Über eine weitere elektrische Verbindung 11 zwischen dem Multiplexer 8 und dem eigentlichen Meßteil 4 werden Signale von der Datenverarbeitungseinrichtung 10 zu dem Programmierteil 5 übertragen, bei denen es sich um das Temperaturverhalten kompensierende Signale handelt; diese Signale werden in später noch beschriebener Weise erzeugt.

In entsprechender Weise sind mehrere weitere, in der Figur nur durch die Punkte angedeutete Meßeinrichtungen mit zugeordneten Temperaturfühlern entsprechend dem Temperaturfühler 6 über nur angedeutete weitere elektrische Verbindungen und über den Multiplexer 8 mit der Datenverarbeitungseinrichtung 10 verbunden.

Wie die Figur ferner zeigt, ist der Ofen 1 mit einer Heizungssteuerung 13 versehen, die von der Datenverarbeitungseinrichtung 10 so gesteuert wird, daß sich die Temperatur im Raum 2 des Ofens 1 kontinuierlich verändert, und zwar von einem kleinen Wert bis zu einem Höchstwert. Dabei ist der kleine Wert und der Höchstwert durch den Temperaturbereich gegeben, indem die jeweils zu kompensierenden Meßeinrichtungen ohne temperaturabhängiges Verhalten arbeiten sollen.

Bei dem dargestellten Ausführungsbeispiel ist - wie oben bereits angemerkt wurde - als Meßeinrichtung 3 ein Druck- oder Druckdifferenz-Meßumformer verwendet, weshalb an den Ofen 1 ein Druckkalibriergerät 14 angeschlossen ist, mit dem in dem Ofen 1 von der Datenverarbeitungseinrichtung 10 aus ein bestimmter Druck eingestellt werden kann, der dann die eingangsseitige Meßgröße für alle Meßeinrichtungen bzw. Meßumformer 3 bildet.

Bei der Durchführung des erfindungsgemäßen Verfahrens wird gemäß der in der Figur dargestellten Anordnung in der Weise vorgegangen, daß im Falle von Druck- oder Druck-Meßumformern als zu kompensierende Meßeinrichtungen 3 zunächst der Raum 2 des Ofens 1 auf - 40°C abgekühlt wird. Von dieser unteren Temperatur ausgehend wird von der Datenverarbeitungseinrichtung 10 über die Heizungssteuerung 13 veranlaßt die Temperatur in dem Raum 2 kontinuierlich erhöht. Bei dieser kontinuierlichen Erhöhung der Temperatur in dem Raum 2 wird in einem von der Datenverarbeitungseinrichtung 10 vorgegebenen Takt über die Verbindung 7 jeweils ein Meßwert des Drucksensors 4 über den Multiplexer 8 abgenommen; gleichzeitig wird die Ausgangsgröße des Temperaturfühlers 6 erfaßt und in der Datenverarbeitungseinrichtung 10 dem jeweiligen Meßwert des Drucksensors 4 zugeordnet abgelegt. Es werden auf diese Weise bis zum Erreichen eines höchsten Temperaturwertes von etwa + 85° C ständig Meßwerte des Drucksensors 4 und Ausgangsgrößen des Temperaturfühlers 6 aufgenommen; mittels des Multiplexers 8 geschieht dies auch hinsichtlich der weiteren Drucksensoren. Nach Erreichen der Höchsttemperatur von + 85° C werden von der Datenverarbeitungseinrichtung 10 die erfaßten Werte ausgewertet und entsprechende das Temperaturverhalten kompensierende Signale gebildet. Diese Signale werden zu den Programmierteilen 5 der Drucksensoren 4 übertragen und führen zu einer Kompensation des Temperaturverhaltens des jeweiligen Meßumformers.

Nachdem vom Programmierteil 5 die Signale der Datenverarbeitungseinrichtung 10 verarbeitet sind, wird die Temperatur im Raum 2 des Ofens 1 wieder kontinuierlich gesenkt, wobei wiederum im Arbeitstakt der Datenverarbeitungseinrichtung 10 die Ausgangsgröße des Drucksensors 4 über die Verbindung 7 erfaßt und auch die Ausgangsgröße des Temperaturfühlers 6 über die Verbindung 12 ermittelt wird. Diese Größen werden wiederum in der Datenverarbeitungseinrichtung 10 verarbeitet, und es wird überprüft, ob das Kompensationsergebnis zufriedenstellend ist. Mittels des Multiplexers 8 wird hinsichtlich der weiteren Drucksensoren gleichzeitig entsprechend verfahren.

Bei einer Durchführung des erfindungsgemäßen Verfahrens zur Kompensation des statischen Druckes als äußere Einflußgröße bei einem Druckdifferenz-Meßumformer mit einem Programmierteil als Meßeinrichtung wird der Meßumformer und mit ihm zusammen in der Regel mehrere gleiche Meßumformer mit einer Druckdifferenz bei kontinuierlich gesteigertem statischen Druck beaufschlagt. Jeder Druckdifferenz-Meßumformer ist zur Erfassung des statischen Druckes mit einem Druckfühler ausgerüstet, der - in entsprechender Weise wie die Temperaturfühler bei dem oben beschriebenen Ausführungsbeispiel - an den Programmierteil angeschlossen ist. Eine Datenverarbeitungseinrichtung, die an den Programmierteil des jeweiligen Meßumformers angeschlossen ist und entsprechend programmiert ist, gibt den Einfluß des den statischen Druckes kompensierende Signale an den Programmierteil ab.

Soll im Rahmen des erfindungsgemäßen Verfahrens bei Druck-oder Druckdifferenz-Meßumformern als Meßeinrichtungen eine Linearisierung der Druckkennlinie erfolgen, dann wird mit einem Druckkalibriergerät, das von einer Datenverarbeitungseinrichtung gesteuert wird, der Druck kontinuierlich erhöht. Die Meßwerte der Drucksensoren der Meßumformer werden über einen Multiplexer weitestgehend zeitgleich von der Datenverarbeitungseinrichtung erfaßt. Daraus werden eine Linearisierung der Kennlinie der Drucksensoren bewirkende Signale in der Datenverarbeitungseinrichtung gebildet und an die Programmiereinheit übertragen. Die Kennlinie wird bei Druckentlastung mit einem kontinuierlich absinkenden Druck geprüft. Eine eventuell aus dem Zeitunterschied zwischen Druckvorgabe und Meßwerterfassung resultierende Meßwertabweichung wird durch eine spätere Kalibrierung von Kleinst- und Größtwert korrigiert.

## Patentansprüche

1. Verfahren zum Kompensieren des durch Temperaturänderungen verursachten Fehlverhaltens von jeweils mit einem Programmierteil versehenen Meßeinrichtungen (3), bei dem
- die Meßeinrichtungen (3) mit den zugehörigen Programmierteilen (5) in einem Temperaturänderungen ausgesetzten Raum (2) untergebracht werden, in dem auch mindestens ein Temperaturfühler (6) vorhanden ist,
- die Meßeinrichtungen (3) mit den zugehörigen Programmierteilen (5) sowie der mindestens eine Temperaturfühler (6) mit einer Datenverarbeitungseinrichtung (10) verbunden werden,
- eine Meßgröße an die Meßeinrichtungen (3) angelegt wird und Temperaturänderungen in dem Raum (2) vorgenommen werden,
- die bei der jeweils geänderten Temperatur ermittelten Meßwerte von der Datenverarbeitungseinrichtung (10) erfaßt und verarbeitet werden und
- von der Datenverarbeitungseinrichtung (10) das durch die Temperaturveränderungen verursachte Fehlverhalten kompensierende Signale an den Programmierteil der Meßeinrichtungen (3) abgegeben werden,
**dadurch gekennzeichnet**, daß
- Meßeinrichtungen (3) mit jeweils einem einem eigentlichen Meßteil (4) dicht benachbart angeordneten Temperaturfühler (6) verwendet werden und
- die Temperaturänderung kontinuierlich vorgenommen wird und dabei in einem von der Datenverarbeitungseinrichtung (10) vorgegebenen Takt die jeweilige Ausgangsgröße des Temperaturfühlers (6) und der jeweilige Meßwert der Meßeinrichtungen (3) erfaßt werden.

2. Verfahren nach Anspruch 1,
**dadurch gekennzeichnet,** daß
- die Temperaturen von einem kleinen Wert ausgehend kontinuierlich vergrößert wird und bei Erreichen eines Höchstwertes der Temperatur die kompensierenden Signale erzeugt und zum Programmierteil der Meßeinrichtungen (3) übertragen werden und
- die Temperatur vom Höchstwert kontinuierlich bis zu dem kleinen Wert unter Erfassung der Ausgangsgröße des Temperaturfühlers (6) und der Meßwerte in dem von der Datenverarbeitungseinrichtung (10) vorgegebenen Takt verringert wird und die Meßwerte in der Datenverarbeitungseinrichtung (10) zur Überprüfung des Kompensationsergebnisses ausgewertet werden.

3. Verfahren nach Anspruch 1 oder 2,
**dadurch gekennzeichnet**, daß
- bei als Druck- oder Druckdifferenzmeßumformer (3) ausgebildeten Meßeinrichtungen der Temperaturfühler (6) dem Drucksensor (4) dicht benachbart zugeordnet wird.

4. Verfahren nach Anspruch 3,
**dadurch gekennzeichnet**, daß
- zur Kompensation des Einflusses des statischen Druckes auf das Verhalten eines Druckdifferenz-Meßumformers als Meßeinrichtung dem Meßumformer ein den statischen Druck erfassender Fühler (Druckfühler) zugeordnet wird.

5. Verfahren nach Anspruch 3 oder 4,
**dadurch gekennzeichnet**, daß
- zur Linearisierung der Druckkennlinie von als Druck- oder Druckdifferenzmeßumformer ausgebildeten Meßeinrichtungen in dem Raum ein einziger auf Druck als Einflußgröße ansprechender Prazisionsdruckgeber angeordnet wird und der Druck in dem Raum kontinuierlich verändert wird und
- während der Druckveränderung in einem durch die Datenverarbeitungseinrichtung vorgegebenen Takt die Ausgangsgröße des Präzisionsdruckgebers und die Werte der Druck- oder Druckdifferenzmeßumformer erfaßt werden.

6. Verfahren nach Anspruch 5,
**dadurch gekennzeichnet**, daß
- der Druck von einem kleinen Wert ausgehend kontinuierlich bis zu einem Höchstwert vergrößert wird und bei Erreichen des Höchstwertes des Druckes in dem Raum eine Linearisierung der Kennlinie bewirkende Signale von der Datenverarbeitungseinrichtung erzeugt und zum Programmierteil übertragen werden und
- der Druck vom Höchstwert kontinuierlich bis zu dem kleinen Wert unter Erfassung der Ausgangsgröße des Präzisionsdruckgebers und der Meßwerte in dem durch die Datenverarbeitungseinrichtung vorgegebenen Takt verringert wird und die Meßwerte in der Datenverarbeitungseinrichtung zur Überprüfung des Linearisierungsergebnisses ausgewertet werden.

## Claims

1. Method for compensating the incorrect operation, caused by temperature changes, of measuring devices (3) which are provided with a respective programming portion, in which method
- the measuring devices (3) having the associated programming portions (5) are accommodated in a room (2) which is exposed to temperature changes and in which there is also at least one temperature detector (6),
- the measuring devices (3), which have the associated programming portions (5), and the at least one temperature detector (6) are connected to a data-processing device (10),
- a measured variable is applied to the measuring devices (3) and temperature changes are carried out in the room (2),
- the measured values established at each altered temperature are detected and processed by the data-processing device (10), and
- signals which compensate the incorrect behaviour caused by the temperature changes are output by the data-processing device (10) to the programming portion of the measuring devices (3),
characterised
- in that measuring devices (3) each having a temperature detector (6) arranged directly next to an actual measuring portion (4) are used, and
- in that the temperature alteration is carried out continuously, and in this connection, the respective output variable of the temperature detector (6) and the respective measured value of the measuring devices (3) are detected in a rhythm which is specified by the data-processing device (10).

2. Method according to claim 1, characterised in that
- the temperatures are increased continuously starting from a low value, and when a maximum value of the temperature is reached, the compensating signals are generated and transmitted to the programming portion of the measuring devices (3), and
- the temperature is reduced continuously from the maximum value to the low value whilst detecting the output variable of the temperature detector (6) and the measured values in the rhythm which is specified by the data-processing device (10), and the measured values are evaluated in the data-processing device (10) in order to check the compensation result.

3. Method according to claim 1 or 2,
characterised in that
- in the case of measuring devices constructed as pressure transducers or pressure-difference transducers (3), the temperature detector (6) is arranged directly next to the pressure sensor (4).

4. Method according to claim 3, characterised in that
- in order to compensate the influence of the static pressure on the behaviour of the pressure-difference transducer as measuring device, there is allocated to the transducer a detector (pressure detector) which detects the static pressure.

5. Method according to claim 3 or 4,
characterised in that
- for the linearization of the pressure characteristic of measuring devices constructed as pressure transducers or pressure-difference transducers, there is arranged in the room a single precision pressure sensor which responds to pressure as an influencing variable, and the pressure in the room is altered continuously, and
- during the pressure alteration, the output variable of the precision pressure sensor and the values of the pressure transducers or pressure-difference transducers are detected in a rhythm which is specified by the data-processing device.

6. Method according to claim 5, characterised in that
- the pressure is increased continuously starting from a low value up to a maximum value, and when the maximum value of the pressure in the room is reached, a signal which effects a linearization of the characteristic is generated by the data-processing device and transmitted to the programming portion, and
- the pressure is reduced continuously from the maximum value to the low value whilst detecting the output variable of the precision pressure sensor and the measured values in the rhythm which is specified by the data-processing device, and the measured values are evaluated in the data-processing device in order to check the linearization result.

## Revendications

1. Procédé de compensation du comportement erroné, provoqué par des variations de température, de dispositifs de mesure (3) pourvus respectivement d'une partie de programmation, dans lequel
- les dispositifs de mesure (3) sont placés, avec les parties de programmation (5) associées, dans une chambre (2) soumise à des variations de température et dans laquelle est également présente au moins une sonde de température (6),
- les dispositifs de mesure (3), avec les parties de programmation (5) associées ainsi qu'avec ladite au moins une sonde de température (6), sont reliés à un dispositif de traitement de données (10),
- une grandeur de mesure est appliquée aux dispositifs de mesure (3) et des variations de température sont effectuées dans la chambre (2),
- les valeurs de mesure, déterminées à la température chaque fois modifiée, sont relevées et traitées par le dispositif de traitement de données (10), et
- des signaux de compensation du comportement erroné, provoqué par les variations de température, sont fournis par le dispositif de traitement de données (10) à la partie de programmation des dispositifs de mesure (3),
caractérisé par le fait que
- on utilise des dispositifs de mesure (3) ayant respectivement une sonde de température (6) placée de manière immédiatement adjacente à une partie de mesure (4) proprement dite,
- on procède en continu à une variation de la température, et on relève, selon un cadencement prédéfini par le dispositif de traitement de données (10), les grandeurs de sortie correspondantes de la sonde de température (6)et la valeur de mesure correspondante des dispositifs de mesure (3).

2. Procédé selon la revendication 1,
caractérisé par le fait que
- l'on élève les températures en continu, à partir d'une petite valeur et que, lorsqu'une valeur maximale de la température est atteinte, les signaux de compensation sont produits et sont transmis à la partie de programmation des dispositifs de mesure (3), et que
- l'on abaisse la température en continu, à partir de la valeur maximale jusqu'à la petite valeur, en relevant la grandeur de sortie de la sonde de température (6) et les valeurs de mesure selon le cadencement prédéfini par le dispositif de traitement de données (10), et que l'on exploite les valeurs de mesure dans le dispositif de traitement de données (10) afin de vérifier le résultat de la compensation.

3. Procédé selon la revendication 1 ou 2,
caractérisé par le fait que
- dans le cas de dispositifs de mesure réalisés en tant que transducteurs de mesure de pression ou de différence de pression (3), la sonde de température (6) est disposée de manière immédiatement adjacente au capteur de pression (4).

4. Procédé selon la revendication 3,
caractérisé par le fait que
- pour la compensation de l'influence de la pression statique sur le comportement d'un transducteur de mesure de différence de pression, servant de dispositif de mesure, un capteur (capteur de pression) relevant la pression statique est associé au transducteur de mesure.

5. Procédé selon la revendication 3 ou 4,
caractérisé par le fait que
- pour la linéarisation de la caractéristique de pression de dispositifs de mesure réalisés en tant que transducteurs de mesure de pression ou de différence de pression, un seul capteur de pression de précision, réagissant à la pression en tant que paramètre, est disposé dans la chambre, et la pression est modifiée en continu dans la chambre, et
- pendant la modification de la pression, la grandeur de sortie du capteur de pression de précision et les valeurs des transducteurs de mesure de pression ou de différence de pression sont relevées selon un cadencement prédéfini par le dispositif de traitement de données.

6. Procédé selon la revendication 5,
caractérisé par le fait que
- l'on augmente la pression en continu, à partir d'une petite valeur jusqu'à une valeur maximale et, lorsque la valeur maximale de la pression dans la chambre est atteinte, les signaux effectuant une linéarisation de la caractéristique sont produits par le dispositif de traitement de données et sont transmis à la partie de programmation, et que
- l'on abaisse la pression en continu, à partir de la valeur maximale jusqu'à la petite valeur, en relevant la grandeur de sortie du capteur de pression de précision et les valeurs de mesure selon le cadencement prédéfini par le dispositif de traitement de données, et l'on exploite les valeurs de mesure dans le dispositif de traitement de données afin de vérifier le résultat de la linéarisation.
